(19) Europäisches Patentamt
European Patent Office
Office européen des brevets

(11) **EP 2 449 482 B1**

(12) **EUROPÄISCHE PATENTSCHRIFT**

(45) Veröffentlichungstag und Bekanntmachung des Hinweises auf die Patenterteilung:
**04.08.2021 Patentblatt 2021/31**

(51) Int Cl.:
**G01N 29/44** [(2006.01)]     **G06F 17/14** [(2006.01)]

(21) Anmeldenummer: **10740140.8**

(86) Internationale Anmeldenummer:
**PCT/DE2010/000735**

(22) Anmeldetag: **23.06.2010**

(87) Internationale Veröffentlichungsnummer:
**WO 2011/000356 (06.01.2011 Gazette 2011/01)**

(54) **Verfahren zur Filterung von Messsignalen bei der zerstörungsfreien Materialprüfung**

Method for filtering measurement signals in non-destructive material testing

Procédé de filtrage de signaux de mesure dans le contrôle non destructif de matériaux

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.07.2009 DE 102009032100**

(43) Veröffentlichungstag der Anmeldung:
**09.05.2012 Patentblatt 2012/19**

(73) Patentinhaber: **Vallourec Deutschland GmbH**
**40472 Düsseldorf (DE)**

(72) Erfinder:
• **ORTH, Thomas**
**45481 Mülheim (DE)**
• **NITSCHE, Stefan**
**45475 Mülheim (DE)**
• **SCHMITTE, Till**
**44807 Bochum (DE)**
• **MÜLLER, Klaus-Dieter**
**45473 Mühlheim (DE)**

(74) Vertreter: **Moser Götze & Partner Patentanwälte mbB**
**Paul-Klinger-Strasse 9**
**45127 Essen (DE)**

(56) Entgegenhaltungen:
**DE-A1-102005 036 509**

• **NOUNOU M N ET AL: "Chapter 5 - Multiscale methods for denoising and compression" In: "Wavelet in Chemistry", 2000, ELSEVIER SCIENCE B.V., XP008145181, ISBN: 978-0-444-50111-0 Seiten 119-150, [gefunden am 2007-03-27] Abschnitt 4.1.2 ab Seite 130, "Multiscale filtering and compression" Abschnitt 5 "On-line multiscale filtering"**
• **QUAN PAN ET AL: "Two denoising methods by wavelet transform", IEEE TRANSACTIONS ON SIGNAL PROCESSING, Bd. 47, Nr. 12, Dezember 1999 (1999-12), Seiten 3401-3406, XP011058795, ISSN: 1053-587X**
• **Matz V ET AL: "Ultrasonic signal de-noising using dual filtering algorithm", 17th World Conference on Nondestructive Testing, 25-28 October 2008, Shanghai, China, Oktober 2008 (2008-10), XP55013259, Gefunden im Internet: URL:http://www.ndt.net/article/wcndt2008/papers/235.pdf [gefunden am 2011-11-28]**
• **Saric M et al: "White noise reduction of audio signal using wavelets transform with modified universal threshold", WSEAS Conferences 2005, 13-15 February 2005, Salzburg, Austria, Februar 2005 (2005-02), XP55013263, Gefunden im Internet: URL:http://www.wseas.us/e-library/conferences/2005salzburg/papers/492-260.pdf [gefunden am 2011-11-28]**
• **Bäni W: "Kapitel 9.2 Denoising" In: "Wavelets - Eine Einführung für Ingenieure, 2. Auflage", 2005, Oldenbourg Verlag, XP55013292, Seiten 190-203, Gleichung (9.5)**

- PARDO E ET AL: "Shift invariant wavelet denoising of ultrasonic traces", ACTA ACUSTICA UNITED WITH ACUSTICA, Bd. 94, Nr. 5, September 2008 (2008-09), Seiten 685-693, XP008145118, ISSN: 1610-1928
- Schmitte T ET AL: "Wavelet-Filterung zur Verbesserung der Empfindlichkeit der Streufluss-Prüfung", DGZfP-Jahrestagung 2009, 18-20 May 2009, Münster, Germany, Mai 2009 (2009-05), XP55011577, Gefunden im Internet: URL:http://www.ndt.net/article/dgzfp2009/Inhalt/p21.pdf [gefunden am 2011-11-09]
- JUN ZHAO ET AL: "On signal denoising using quasi real-time Wavelet algorithm in DSP embedded system", PROCEEDINGS OF THE 9TH INTERNATIONAL CONFERENCE ON SIGNAL PROCESSING (ICSP 2008), 26-29 OCTOBER 2008, BEIJING, CHINA, 26. Oktober 2008 (2008-10-26), Seiten 46-51, XP031368989, ISBN: 978-1-4244-2178-7
- DE O. MOTA H ET AL: "Data processing system for denoising of signals in real-time using the wavelet transform", THIRD INTERNATIONAL WORKSHOP ON INTELLIGENT SOLUTIONS IN EMBEDDED SYSTEMS, 20 MAY 2005, HAMBURG, GERMANY, 2005, Seiten 128-138, XP55011760, DOI: 10.1109/WISES.2005.1438721 ISBN: 978-3-90-246303-6
- SCHMITTE T ET AL: "Wavelet-based denoising of EMAT signals - from development to industrial real-time application", SIXTH INTERNATIONAL WORKSHOP ADVANCES IN SIGNAL PROCESSING FOR NON DESTRUCTIVE EVALUATION OF MATERIALS, 25-27 AUGUST 2009, LONDON, ONTARIO, CANADA, August 2009 (2009-08), XP55011575,
- ZOICAN S: "Audio signals noise removal real time system", 8TH INTERNATIONAL CONFERENCE ON COMMUNICATIONS (COMM 2010), 10-12 JUNE 2010, BUCHAREST, ROMANIA, 10. Juni 2010 (2010-06-10), Seiten 25-28, XP031708209, ISBN: 978-1-4244-6360-2
- None

**Beschreibung**

Die Erfindung betrifft ein Verfahren zur Filterung von Messsignalen gemäß dem Oberbegriff des Patentanspruches 1.

Eine Filterung von Messsignalen wird bei der zerstörungsfreien Materialprüfung bei der Herstellung von Rohren aus Metall zur Prüfung auf Oberflächenfehler oder Wanddickenabweichungen angewandt. Hierzu werden z. B. die Ultraschall- oder Streuflussprüfung eingesetzt, die seit langem bekannt und bewährt sind.

Die Prüfungen werden angewandt um produktionsbegleitend insbesondere die Einhaltung der geforderten Wanddicke des Rohres zu kontrollieren und eventuell vorhandene Ungänzen in der Rohrwand, wie z. B. Dopplungen, Risse, Kerben, Einwalzungen oder sonstige Oberflächenfehler, zu detektieren.

Bei der Ultraschallprüfung werden nach dem Puls-Echoverfahren ausgehend von der Rohraußenoberfläche Ultraschallimpulse in der Wand angeregt und die von der Rohrinnenoberfläche reflektierten Signale wieder empfangen. Aus der Laufzeit des Signals und aus der Schallgeschwindigkeit im zu prüfenden Material lässt sich die Dicke der Rohrwand errechnen. Üblicherweise wird dieses Verfahren produktionsbegleitend und automatisiert sowohl für magnetisierbare und nicht magnetisierbare Rohrwerkstoffe eingesetzt.

Allgemein wird in der Messtechnik zwischen Nutz- und Störsignalen unterschieden. Dabei sind die Nutzsignale die gesuchten Träger von Informationen, die von Störsignalen, wie z. B. Hintergrundrauschen, überlagert sind. Das Verhältnis von (Nutz-)Signal S (S = Signal) zum Störsignal N (N = Noise) wird als S/N-Verhältnis angegeben. Grundsätzlich ist immer wünschenswert ein möglichst großes S/N-Verhältnis zu erreichen, um eine hohe Prüfempfindlichkeit darzustellen.

Nachteilig bei der zerstörungsfreien Prüfung (zfP) ist, dass mit den üblichen Auswertemethoden von Signalen insbesondere bei ungünstigen Verhältnissen von Lage der Ungänze und Geometrie des Prüflings Ungänzen nicht immer eindeutig detektiert werden können. Der Abstand der Fehleranzeige zum Rauschpegel ist dann zu gering, um zu verwertbaren Aussagen zu kommen.

Zur Signalauswertung bei der zerstörungsfreien Materialprüfung werden deshalb zunehmend neuartige auf Wavelet-Algorithmen basierende Filtertechniken eingesetzt, um Fehlersignale vom Grundrauschpegel zu trennen.

Neben der digitalen Filtertechnik mit konventionellen Filter-Algorithmen sind besonders die Wavelet-Algorithmen sehr gut für diese Aufgabe geeignet. Anstelle von harmonischen Funktionen werden Wavelets als Filterkriterium genutzt, da sie eine hohe Ähnlichkeit mit den Nutzsignalen aufweisen können. Mit Hilfe von Wavelet-Filtern lässt sich gegenüber konventionellen Filtertechniken eine deutlich effektivere Rauschunterdrückung realisieren.

Allgemein handelt es sich bei der Wavelet-Filterung um eine der Fourier-Transformation verwandte Technik, bei der ein Signal aus dem Zeitbereich in eine Frequenz-Domäne überführt wird. Während die Fourier-Transformation dabei die Zeitinformation vollständig unterdrückt, bleibt bei der Wavelet-Transformation in die Wavelet-Domäne ein Teil der Zeitinformation erhalten und man erhält Informationen über die Frequenz eines Signals zu einem Zeitpunkt. Ähnliches kann auch mit der sogenannten "short time fourier transformation" erreicht werden.

Im Unterschied zur Fourier-Transformation werden bei der Wavelet-Transformation keine harmonische Funktionen (sin/cos) als orthogonales Funktionensystem genutzt, sondern man benutzt kurze pulsartige "Wavelets". Letztlich wird bei der Wavelet-Transformation das Signal mit diesen Wavelet-Basisfunktionen gefaltet.

Man kann nun zeigen, dass sich dieser Prozess als eine bestimmte Aneinanderreihung von FIR-Filtern ("Finite Impulse Response") darstellen lässt. Des Weiteren kann dieser Algorithmus als Anwendung einer bestimmten Matrix auf das Signal gewertet werden, woraus der bekannte "Fast-Wavelet-Transformation" (FWT) Algorithmus folgert. Dieser beinhaltet das regelmäßige weglassen ("down-sampling") redundanter Informationen und eine Blockung des Datenstroms. Diese letzten beiden Eigenschaften der FWT sind in der zerstörungsfreien Prüfung als ungünstig zu bewerten. Zum Einen führt die Blockung der Daten an den Rändern des Datenstroms zu ungewünschten Artefakten. Zum Anderen führt das oben erwähnte "down-sampling" zu nicht stationären Signalverhältnissen.

Nach der Wavelet-Transformation werden die so berechneten Wavelet-Koeffizienten einer Schwellwertbetrachtung unterzogen. Dies bedeutet, dass die Wavelet-Koeffizienten mit einem Schwellwert (threshold) verglichen und nach einem festzulegendem Verfahren, z. B. "soft-thresholding", verändert. Diese modifizierten Wavelet-Koeffizienten werden einer inversen Wavelet-Transformation zugeführt. Das gesamte Verfahren bezeichnet man als Wavelet-Filterung.

Zur Trennung von Rausch- und Informationsanteilen von Signalen bei der industriellen Prozessüberwachung ist es allgemein, z. B. aus der DE 102 25 344 A1, bekannt, zur Auswertung von zeitlichen Signalen die Wavelet-Transformation anzuwenden. Mit der Wavelet-Transformation wird das Originalsignal auf Wavelet-Basisfunktionen projiziert, was eine Abbildung aus dem Zeitbereich in die Zeit-Frequenzebene darstellt. Hierbei werden die Wavelet-Funktionen, die im Zeit- und Frequenzbereich lokalisiert sind aus einem einigen Prototyp-Wavelet, der sogenannten Mutterfunktion, durch Dilatation und Translation abgeleitet.

Angestrebt wird mit der Wavelet-Transformation das Rauschniveau im Vergleich zum Fehlersignal signifikant abzusenken.

In der WO 2005/012941 wird ein Verfahren zur zerstörungsfreien Prüfung von Gegenständen mittels Ultraschallwellen angegeben, wobei mittels Wavelet-Transformation die Datenmenge reduziert bzw. komprimiert wird. Eine Entstörung, bzw. Signaltrennung, wird nicht vorgenommen.

Aus der DE 10 2005 036 509 A1 ist ein Verfahren zur zerstörungsfreien Prüfung von Rohren auf Oberflächenfehler bekannt, bei dem eine Echtzeitauswertung der Messsignale über eine spezielle Art der Filterung und Verarbeitung der Daten vorgenommen wird. Hier werden die analogen Signale in einen kontinuierlichen Datenstrom digitaler Daten überführt und über weitere Verarbeitungsschritte einem digitalen Signalprozessor oder einem übergeordneten Datenverarbeitungssystem zugeführt.

Nachteilig bei den vorgenannten bekannten Verfahren ist jedoch, dass die Schwellwerte in der Wavelet-Domäne zur Filterung der Messsignalen entweder nach bekannten mathematischen Methoden bestimmt oder experimentell ermittelt werden müssen und damit fest vorgegeben sind. Die experimentelle Ermittlung ist sehr aufwändig und nicht allgemeingültig. Die mathematischen Verfahren führen in der Praxis nicht immer zu befriedigenden Ergebnissen, weil die getroffenen Annahmen zur Herleitung dieser Schwellwerte (Annahme: weißes Rauschen als Störsignal) nicht allgemein zutreffen und deshalb zu einem unbefriedigenden Ergebnis bei der Rauschsignaltrennung führen.

E. Pardo et al, "Shift Invariant Wavelet Denoising of Ultrasonic Traces", Acta Acustica United with Acustica, Vol. 94 (2008), Seiten 685-693, offenbart ein Verfahren zur Entrauschung von Messsignalen bei einer Ultraschallprüfung durch Wavelet-Filterung. Dabei wird die stationäre Wavelet-Transformation mit verschiedenen Schwellwertbetrachtungen angewandt. Zur Berücksichtigung von farbigem Rauschen werden Schwellwerte für jede Zerlegungsstufe, auf der Basis der berechneten Wavelet-Koeffizienten der jeweililgen Zerlegungsstufe, bestimmt.

Aufgabe der Erfindung ist es, ein sicheres und kostengünstiges Verfahren zur Filterung von Messsignalen bei der zerstörungsfreien Materialprüfung auf Oberflächenfehler oder Wanddickenabweichungen während der Herstellung von Metallrohren anzugeben, bei dem die Schwellwerte in der Wavelet-Domäne bezogen auf die jeweilige Messsituation variabel veränderbar sind und so zu einer möglichst optimalen Rauschtrennung führen.

Erfindungsgemäß wird diese Aufgabe dadurch gelöst, dass aus einer einstellbaren Anzahl bereits berechneter Wavelet-Koeffizienten einer Zerlegungsstufe eine statistische Kenngröße berechnet wird und diese zur Bestimmung des Schwellwertes für diese Zerlegungsstufe mit einem für alle Stufen gemeinsamen einstellbaren Wert multipliziert wird.

Bei der statistischen Kenngröße kann es sich beispielsweise um die Standardabweichung vom Mittelwert, um die Standardabweichung vom Median oder um die mittlere quadratische Abweichung RMS Root-Mean-Square handeln. Vorteilhaft für dieses Verfahren ist die aus DE 10 2005 036 509 A1 bekannte Wavelet-Filterung mittels eines kontinuierlichen digitalen Datenstroms anwendbar, da hiermit auch die Datenhistorie zur Schwellwertermittlung herangezogen werden kann. Des Weiteren kann hiermit vorteilhaft auch die Länge des Betrachtungszeitraums der Historie eingestellt werden.

In einer vorteilhaften Ausgestaltung der Erfindung ist außerdem vorgesehen einen weiteren Parameter bereitzustellen, der den Maximalwert der Differenz zwischen dem einen und dem darauffolgenden Schwellwert begrenzt, um zu vermeiden, dass sich der automatisch berechnete Schwellwert zu stark ändert. Dies hätte ansonsten zur Folge, dass die Filterung ungleichmäßig wird.

In speziellen Situationen kann es vorteilhaft sein, die sogenannte Approximation, die normalerweise unverändert belassen wird, auch einer Schwellwertbetrachtung zuzuführen oder diese sogar auf einen Wert Null zu setzen.

Diese Approximation repräsentiert den langwelligsten Anteil am Signal, also den Untergrund, der durch n-stufige Wavelet-Zerlegung berechnet wird.

In der Erfindung wird über ein zusätzliches Signal der Berechnungs-Algorithmus zur Filterung in den Messpausen angehalten, so dass bei einer Wiederaufnahme der Messung die Daten der vorgehenden Messung als Historie zur Verfügung stehen.

Die erfindungsgemäße Filterung der Messsignale erfolgt über Wavelet-Filter, die aus einer kaskadenförmigen Anordnung von FIR-(Finite Impulse Response) Filtern bestehen. Diese Anordnung wird auch als Filter-Bank bezeichnet. Durch die Anwendung dieser Struktur wird das Signal zunächst in die Wavelet-Domäne transformiert (auch als Zerlegung / decomposition bezeichnet), dieser Vorgang ist vergleichbar mit der Transformation in die Frequenz-Domäne bei der Fourier-Transformation.

Das Signal in der Wavelet-Domäne besteht aus Wavelet-Koeffizienten, die in verschiedenen Levels oder Stufen vorliegen. Die Stufen-Anzahl ergibt sich aus der Tiefe der kaskadierten FIR-Filter Anordnung.

In der Wavelet-Domäne werden nun erfindungsgemäß die Wavelet-Koeffizienten verändert. Dies geschieht durch eine Bewertung der Amplitude der Wavelet-Koeffizienten innerhalb einer Stufe. Für jede Stufe wird ein positiver threshold-Wert (Schwellwert) festgelegt. Jeder Koeffizient wird mit diesem Wert verglichen. Falls der Betrag des Koeffizienten kleiner als der threshold-Wert ist, wird dieser zu Null gesetzt. Falls der Betrag oberhalb liegt, wird bei positiven Koeffizienten der threshold-Wert abgezogen, bei negativen dazuaddiert.

Nach diesem sogenannten soft-thresholding werden die Wavelet-Koeffizienten wieder zurück in die Zeit-Domäne transformiert.

Neben dem soft-thresholding ist erfindungsgemäß auch das sogenannte hard-thresholding implementiert. Dabei "überleben" die Wavelet-Koeffizienten oberhalb des thresholds in der entsprechenden Stufe OHNE Wertänderung, alle Koeffizienten unterhalb der Schwelle werden dagegen zu Null gesetzt.

Die Rücktransformation (auch Synthese / reconstruction) geschieht äquivalent durch eine kaskadenförmige Filter-Struktur. Die Filter-Koeffizienten sind jedoch andere als bei der HinTransformation.

Im Unterschied zu bekannten Filtermethoden wird erfindungsgemäß die sogenannte "stationary wavelet transformation" umgesetzt. Dabei wird auf das im bekannten "fast wavelet algorithm" benutzte "downsampling" nach jeder Stufe verzichtet. Dadurch werden zwar redundante Signalanteile beibehalten, die gefilterten Signale sind aber nicht mehr abhängig von der Position innerhalb des Eingangssignals (daher "stationary").

Da die vorliegenden Signale quasi-unendlich sind, kann auch dieser Algorithmus erfindungsgemäß noch weiter verbessert werden. Ziel ist zunächst auf eine Blockung der Daten zu verzichten und die Filterung kontinuierlich, also Punkt für Punkt, durchzuführen. Dieses Vorgehen verhindert eine Entstehung von Artefakten an den Blockgrenzen ("Blockartefakte") und ist der Signal-Struktur in der zfP besser angepasst.

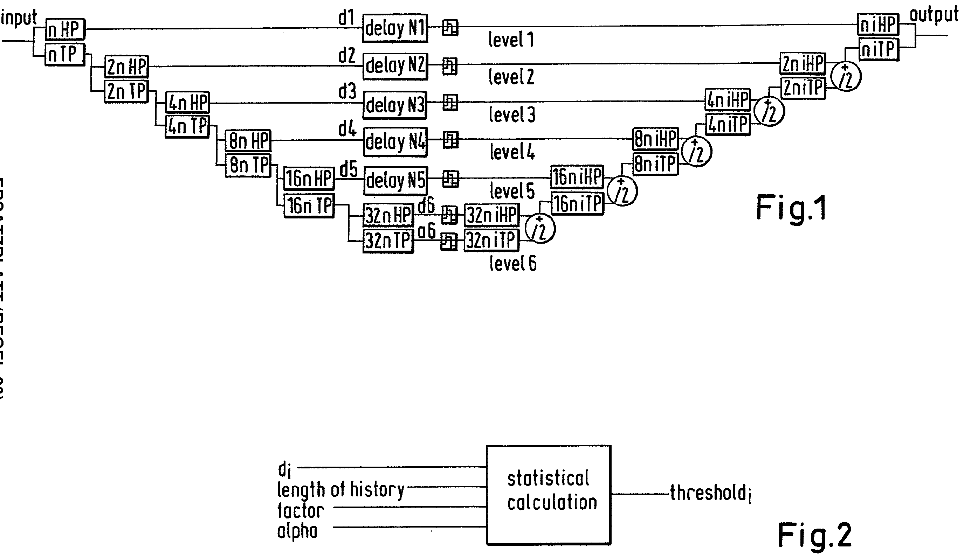

Die erfindungsgemäße kaskadenförmige Struktur ist in **Figur 1** dargestellt. Auf jeder Stufe wird das Eingangssignal durch ein Paar von FIR-Filtern geleitet, jeweils Hochpass (HP) und Tiefpass (TP). Die Filter arbeiten im Punktfür-Punkt-Modus, d. h. für jeden Eingangs-Wert wird ein Ausgangs-Wert erzeugt. Da in jeder Stufe zwei Filter vorliegen verdoppelt sich die Anzahl der Werte pro Stufe.

Die Ergebnisse der HP-Filterung werden jeweils in einem FIFO (First-In-First-Out)-Zwischenspeicher abgelegt.

Diese Wavelet-Koeffizienten werden auch als "details" bezeichnet. Ihre Bezeichnung erfolgt mit "d" und einem Index, der die Stufe angibt. Also erzeugt der erste HP die details d1. In der zweiten Stufe werden die Wavelet-Koeffizienten d2 erzeugt, etc. Die Ergebnisse der TP-Filterung werden der nächsten Stufe zugeführt. Die Filterlänge verdoppelt sich in jeder Stufe durch das Auffüllen mit Nullen. In dem Fall der Daubechies-4-Wavelets hat die erste Stufe einen FIR-HP und -TP mit jeweils 4 Koeffizienten, im Fall der Daubechies-10-Wavelets sind es zehn Filter-Koeffizienten. In der zweiten Stufen wird dieser Filter an jeder zweiten Stelle mit Nullen aufgefüllte, so dass die Filterlänge von HP und TP jeweils (für Daubechies-4) 8 beträgt. In der nächsten Stufe ist die Filterlänge dann 16, etc.

| Stufe | Filterlänge | Beispiel für die FIR-Filter Koeffizienten |
|---|---|---|
| 1 | 4 | a b c d |
| 2 | 8 | a 0 b 0 c d 0 |
| 3 | 16 | a 0 0 0 b 0 0 0 c 0 0 0 d 0 0 0 |

Am Ende der Kaskade bleiben die Signale der HP- und TP-Filterung der letzten Stufe "übrig". Bei 6 Stufen entstehen am Ausgang des 6. HP-Filters also die details d6. Die Ergebnisse der 6. TP-Filterung werden als Approximation bezeichnet und mit a6 abgekürzt. Diese Approximation repräsentiert den langwelligsten Anteil am Signal, also den Untergrund, der durch eine Filter-Bank von 6 TP Filtern berechnet wurde.

Nach der Wavelet-Zerlegung werden die Wavelet-Koeffizienten wie oben beschrieben dem thresholding zugeführt.

Die Rücktransformation geschieht ebenfalls mit FIR-Filtern in einer inversen Struktur, siehe **Figur 1.**

Von unten beginnend werden die Wavelet-Koeffizienten a6 und d6 (nach thresholding) den inversen TP-(iTP) und inversen HP-(iHP) Filtern zugeführt. Diese inversen Filter der letzten (6.) Stufe haben wiederum 128 FIR-Filter-Koeffizienten. Jeder einzelne Ergebnis-Wert der beiden Filter wird addiert und durch 2 geteilt (also quasi ein Mittelwert gebildet). Dieser Wert ist dann der Eingangswert für die iTP-Filter der nächst höheren (5.) Stufe. Der Eingangswert der iHP-Filter stammt jeweils aus dem FIFO der entsprechenden Stufe.

Auf vorgenannte Weise wird das Signal wieder bis zum gefilterten Ausgangssignal zusammengesetzt. Wichtig ist hier, dass jeder Filter Punkt-für-Punkt arbeitet, d. h. in jedem Takt wird ein Wert von links durch das gesamte Schema geschoben. In den einzelnen Stufen müssen immer entsprechend viele Werte gespeichert werden, dadurch kommt es insgesamt zu einer Verzögerung des Signals. Diese Verzögerung entspricht der Addition der Gruppenlaufzeiten eines Signals durch die verschiedenen Filter. Wegen der unterschiedlichen Filterlänge muss zwischen den Zerlegungs- und Synthese-FIR-Filtern jeweils ein Verzögerungsglied (FIFO) gesetzt werden.

Aus dieser Ausführung folgt, dass der Wavelet-Filter keinen Einfluss hat, wenn alle thresholds auf Null gesetzt werden, dann verzögert der Filter nur noch entsprechend. Die Sperr-Wirkung der thresholds erhöht sich mit dem Anstieg ihres Wertes.

Die Filter-Koeffizienten der FIR-Filter repräsentieren das benutzte Wavelet. Jedes Wavelet bestimmt eindeutig die Koeffizienten für die Filter HP, TP, iHP und iTP. Im Fall der Daubechies-4-Wavelets sind vier Koeffizienten maßgeblich. Alle anderen Werte entstehen durch mathematisch begründete Permutationen aus diesen vier Zahlen. Die vier FIR-Filter

HP, iHP, TP und iTP bilden mathematisch einen sogenannten "quadrature mirror filter" mit bestimmten Eigenschaften.

Die als Verzögerungsglieder eingesetzten FIFOs haben unterschiedliche Längen. Das unterste FIFO speichert die Wavelet-Koeffizienten d5; die Koeffizienten der letzten Stufe d6 und a6 können direkt weiterverarbeitet werden.

Dieser FIFO muss also die Gruppenlaufzeiten der FIR-Filter auf der 6. Stufe ausgleichen, damit es zu keinem Phasenversatz kommt. In jeder Stufe muss die Verzögerung die Gruppenlaufzeit der darunter angeordneten Filter-Stufe UND die kumulierte Verzögerung ALLER darunter liegenden Stufen berücksichtigen. In **Figur 1** ist die Filterstruktur exemplarisch für die Filterung mit Stufen angegeben.

Entscheidend ist die Wahl des richtigen Schwellwertes. Dabei orientiert sich das Vorgehen zunächst am sogenannten "global threshold". Bei diesem bekannten Verfahren werden die Wavelet-Koeffizienten eines Levels statistisch bewertet indem man beispielsweise die Standardabweichung berechnet. Dieser Wert wird mit einem aus der Literatur bekannten festen Faktor multipliziert, um eine Abschätzung für einen optimalen threshold zu erhalten. Dieser Wert wird für jeden Level einzeln berechnet.

Dieses Verfahren ist mathematisch streng nur bei Vorliegen von "weißem Rauschen" über dem Nutzsignal sinnvoll, führt dann aber zu einem im bestimmten Sinne optimalen Ergebnis. Bei den in der zfP vorliegenden Signalen liegt in der Regel kein solches Rauschen vor, man spricht hier von "farbigem Rauschen". Weiterhin erschwert das Vorliegen von kohärenten Untergrundsignalen das Verfahren, so dass das Verfahren angepasst werden muss.

Erfindungsgemäß ist statt eines festen Faktors dieser Wert durch den Bediener frei wählbar, so dass eine bestimmte Filterstärke gewählt werden kann. Der Schwellwert (threshold) für Level i ist: thr_i = sigma_i * f, wobei sigma_i die Standardabweichung der details in Level i darstellt und f der frei einstellbare Faktor ist (siehe **Figur 2**).

Das nächste Problem entsteht bei der Berechnung der Standardabweichung. Bei Benutzung der bekannten Wavelet-Algorithmen werden wie oben erwähnt die Daten in Blöcke eingeteilt und dann transformiert. Dabei entsteht für jeden Block in jedem Level eine bestimmte Anzahl von Details, von denen die Standardabweichung berechnet werden kann. Dadurch wird das gesamte Verfahren adaptiv, da ja pro Block ein neuer threshold berechnet wird.

Dieses bekannte Verfahren hat zwei Nachteile. Zum einen ist hier die Adaptivität sehr hoch, d. h. die thresholds schwanken sehr stark, wodurch die Filterwirkung ungleichmäßig wird. Dies ist insbesondere bei der zfP von Nachteil, da hier die gefilterten Werte in der Prüfeinrichtung bewertet werden d. h. mit festen Schwellen verglichen werden müssen. Zum anderen ist diese Form nur schlecht mit der erfindungsgemäßen kontinuierlichen Filterung zu vereinbaren, da je Level nicht gleich viele Datenpunkte zur Verfügung stehen und die Berechnung einer Standardabweichung auch nur schlecht Punkt-für-Punkt durchgeführt werden kann.

Daher wird die Standardabweichung erfindungsgemäß vorteilhaft immer auf den letzten *m*-Punkten berechnet, wobei *m* eine ganze Zahl ist, die einer Anzahl von Messwerten entspricht. Es hat sich als günstig erwiesen, für *m* eine große Zahl zu wählen, die zum Beispiel der Anzahl Messwerte einer oder mehrerer Rohrumdrehungen entspricht. Der Wert *m* ist einstellbar und gibt den Grad der Adaptivität an. Ist *m* klein ändern sich die thresholds häufig, ist *m* groß, wird über einen größeren Messbereich der gleiche threshold benutzt.

Im Unterschied zu bekannten Verfahren wird die Vergangenheit der Messwerte benutzt, um den aktuellen threshold-Wert zu bestimmen. Dieser Vorgehensweise liegt die berechtigte Annahme zugrunde, dass sich Rauschen und Untergrundsignal in ihrer Struktur nicht schnell ändern.

Das bis hier beschriebene Verfahren kann noch weiter verbessert werden, indem ein weiterer Parameter alpha benutzt wird, um die Änderungen der automatisch berechneten thresholds zu dämpfen. Der Parameter alpha dämpft nun die Adaptivität indem ein neuer threshold thr_i_neu nicht zu sehr nach oben abweichen darf: thr_i_neu < thr_i_alt*alpha (siehe **Figur 2**).

Wie oben erwähnt benötigt man eine Abschätzung für den Rauschanteil der Signale in den einzelnen Levels, dazu wird typischerweise die Standardabweichung berechnet. Im Fall von Werten ohne Gleichstromanteil reicht auch die Berechnung des "Root-Mean-Square"-Wertes (RMS) aus. Des Weiteren ist es vorteilhaft, zur Berechnung der Standardabweichung der letzten *m*-Werte innerhalb eines Levels ein Verfahren zu benutzen, welches nicht alle letzten *m*-Werte zwischenspeichert, sondern "running-statistics" gemäß nachstehender Formel benutzt:

$$\sigma^2 = \frac{1}{N-1}\left[\sum_{i=0}^{N-1} x_i^2 - \frac{1}{N}\left(\sum_{i=0}^{N-1} x_i\right)^2\right]$$

Bisher wurde davon ausgegangen, dass die Messwerte als Folge "quasi-unendlich" vorliegen, jede Prüfung ist jedoch endlich. Denn wenn die Filter nach dem Prüfobjekt-Ende bzw. Messende weiterarbeiteten, würde dies zu einer Veränderung der thresholds führen, weil in Prüfpausen eine andere Rausch-Signalstruktur vorliegt als während der Messung. Daher werden beim erfindungsgemäßen Verfahren dem Filter die Prüfpausen durch ein zusätzliches Signal mitgeteilt.

Während dieser Zeit wird die komplette Filterung angehalten, oder zumindest der Algorithmus zur Berechnung der thresholds gestoppt. Der Anfang eines neuen Prüfobjekts wird dann zunächst mit den gleichen thresholds wie das Ende des vorhergehenden Objekts geprüft. Statt Anfang und Ende des Prüfobjekts kann hier auch der Prüfzyklus z. B. Ultraschall-Schuss = A-Bild, eingestellt werden bzw. durch ein Trigger-Signal angezeigt werden.

Grundsätzlich ist es wichtig, mit welcher Abtastrate die Signale dem Filter zugeführt werden und wie viele Stufen (Level) der Filter aufweist. Diese Parameter hängen stark vom betrachteten Fall ab und können erfindungsgemäß auch einstellbar gemacht werden. Dadurch ist der Filter noch weiter parametrierbar. Beim Vorliegen von kohärenten Untergrundsignalen ist es günstig, die Wahl der Anzahl der Stufen und der Abtastrate so zu wählen, dass das Untergrundsignal im wesentlichen in der sogenannten Approximation verbleibt. Wenn dieser Fall vorliegt wird abweichend vom Stand der Technik die Approximation vor der Rücktransformation gänzlich entfernt also zu Null gesetzt.

Das erfindungsgemäße Verfahren kann nach dieser Beschreibung für alle Messsignale mit pulsartigen "Ereignissen" verwendet werden. In der zfP sind das unter anderem die Streufluss-Prüfung, die Ultraschallprüfung und auch die Wirbelstromprüfung, wobei in letzterem Fall die NF-Signale mit Wavelets gefiltert werden sollten.

Der beschriebene Algorithmus kann auf gängiger Computerhardware, dedizierten Signalprozessoren (DSP) oder sogar hardware-nah in konfigurierbare Logikbausteine (z. B. FPGA) programmiert werden.

**Begriffserklärung :**

| | | |
|---|---|---|
| input | - | Eingangssignal |
| HP | - | Hochpass |
| TP | - | Tiefpass |
| delay | - | Verzögerung |
| level | - | Stufe |
| output | - | Ausgangssignal |
| length of history | - | Länge der Historie |
| factor | - | Faktor |
| statistical calculation | - | statistische Bewertung |
| threshold | - | Schwellwert |

**Patentansprüche**

1.  Verfahren zur Filterung von Messsignalen bei der zerstörungsfreien Materialprüfung auf Oberflächenfehler oder Wanddickenabweichungen während der Herstellung von Metallrohren, das die folgenden Schritte umfasst:

    - Anregung zerstörungsfreier Materialprüfungssignale in einer Wand des Rohrs,
    - Empfang von Messsignalen, die an einer inneren Fläche des Rohrs reflektiert wurden und, durch Verwendung eines Signalprozessors,
    - Filterung der Messsignale, als kontinuierlichen, digitalen Datenstrom, mittels Wavelet-Filterung über einen Wavelet-Filter, wobei der Wavelet-Filter aus einer kaskadenförmigen Anordnung von digitalen Zerlegungs-Filtern mit endlicher Impulsantwort in Zerlegungsstufen besteht, die in einem Punkt-für-Punkt-Modus arbeiten, wobei die Messsignale zunächst mittels Wavelet-Transformation in die Wavelet-Domäne überführt werden, in der die Signale aus Wavelet-Koeffizienten in jeder Zerlegungsstufe bestehen, und wobei die Wavelet-Transformation der Messsignale unter Verwendung einer stationären Wavelet-Transformation durchgeführt wird,
    - Berechnen einer statistischen Kenngröße an jeder Zerlegungsstufe aus einer einstellbaren Anzahl bereits berechneter Wavelet-Koeffizienten dieser Zerlegungsstufe,
    - Bestimmen eines Schwellwertes an jeder Zerlegungsstufe indem die statistische Kenngröße mit einem für alle Stufen gemeinsamen, einstellbaren Wert multipliziert wird,
    - Veränderung der Wavelet-Koeffizienten an jeder Zerlegungsstufe durch hard-thresholding oder soft-thresholding bezüglich des Schwellwertes der jeweiligen Zerlegungsstufe,
    - Zuführen der modifizierten Wavelet-Koeffizienten zu einer inversen Wavelet-Transformation, um gefilterte Messsignale zu erhalten, wobei die inverse Wavelet-Transformation der modifizierten Wavelet-Koeffizienten mittels einer kaskadenförmigen Anordnung von digitalen Synthese-Filtern mit endlicher Impulsantwort in Synthesestufen erfolgt, die mit den aufeinanderfolgenden, kaskadenförmigen Zerlegungsstufen der Zerlegungsfilter korrespondieren, wobei die modifizierten Wavelet-Koeffizienten der letzten Zerlegungsstufe einem Paar von inversen Hochpass- und Tiefpass-Filtern zugeführt werden, die Werte beider Filter addiert und durch 2 geteilt werden, wodurch ein Mittelwert gebildet wird und der Mittelwert einer weiteren nachfolgend höheren Stufe zugeführt wird, wobei zwischen den Zerlegungs- und Synthese-FIR-Filtern Verzögerungsglieder unterschiedlicher Länge angeordnet sind, und wobei die digitalen Synthese-Filter im Punkt-für-Punkt-Modus arbeiten, wobei die inverse Wavelet-Transformation der modifizierten Wavelet-Koeffizienten unter Verwendung der stationären Wavelet-Transformation durchgeführt wird, weiterhin umfasst das Verfahren die Schritte:
    - Anhalten der Filterung von Messsignalen während einer Messpause durch Zuführen mindestens eines zusätzlichen Signals,
- Bereitstellen der Daten der vorhergehenden Messung als Historie bei einer Wiederaufnahme der Messung.

**2.** Verfahren nach Anspruch 1, **dadurch gekennzeichnet, dass** zur Berechnung des Schwellwertes der Maximalwert der Differenz zwischen dem einen und dem darauffolgenden Schwellwert begrenzt wird.

**3.** Verfahren nach Anspruch 1, **dadurch gekennzeichnet, dass** die zerstörungsfreien Materialprüfungssignale Ultraschall-Pulse oder Streuflussprüfsignale sind.

**4.** Verfahren nach Anspruch 1, **dadurch gekennzeichnet, dass** bei entstehenden Messpausen über mindestens ein Signal der Anfang oder das Ende der Messpause angezeigt wird und die Länge der Messpause bekannt ist.

**5.** Verfahren nach einem der Ansprüche 1 bis 4, **dadurch gekennzeichnet, dass** bei einer n-stufigen Wavelet-Zerlegung, die Approximation, die den langwelligsten Anteil am Signal repräsentiert, ebenfalls einer Schwellwertbetrachtung zugeführt wird.

**6.** Verfahren nach Anspruch 5, **dadurch gekennzeichnet, dass** die Approximation zu Null gesetzt wird.

**7.** Verfahren nach einem der Ansprüche 1 bis 6, **dadurch gekennzeichnet, dass** zur Berechnung der statistischen Kenngröße die Standardabweichung vom Mittelwert angewendet wird.

**8.** Verfahren nach einem der Ansprüche 1 bis 6, **dadurch gekennzeichnet, dass** zur Berechnung der statistischen Kenngröße der Root-Mean-Square-Wert angewendet wird.

**9.** Verfahren nach einem der Ansprüche 1 bis 6, **dadurch gekennzeichnet, dass** zur Berechnung der statistischen Kenngröße die Standardabweichung vom Median angewandt wird.

**10.** Verfahren nach einem der Ansprüche 1 bis 9, **dadurch gekennzeichnet, dass** die Abtastrate als Parameter zur Anpassung des Filters frei wählbar ist.

**11.** Verfahren nach einem der Ansprüche 1 bis 10, **dadurch gekennzeichnet, dass** die Anzahl der Zerlegungsstufen frei wählbar ist.

**12.** Verfahren nach einem der Ansprüche 1 bis 11, **dadurch gekennzeichnet, dass** die der Filterung zugrunde liegenden Wavelets frei wählbar sind.

**Claims**

**1.** Method for filtering measurement signals during non-destructive material testing for surface defects or wall thickness deviations during the production of metal pipes, which method comprises the following steps:

- exciting non-destructive material testing signals in a wall of the pipe,
- receiving measurement signals that have been reflected off an inner surface of the pipe and, using a signal processor,
- filtering the measurement signals, as a continuous, digital data stream, by means of wavelet filtering via a wavelet filter, wherein the wavelet filter consists of a cascade-like arrangement of digital decomposition filters with finite impulse response in decomposition levels, which filters operate in a point-by-point mode, wherein the measurement signals are first converted into the wavelet domain by means of wavelet transformation, in which wavelet domain the signals consist of wavelet coefficients in each decomposition level, and wherein the wavelet transformation of the measurement signals is carried out using a stationary wavelet transformation,
- calculating a statistical parameter at each decomposition level from an adjustable number of already calculated wavelet coefficients of this decomposition level,
- determining a threshold value at each decomposition level by multiplying the statistical parameter by an adjustable value common to all levels,
- changing the wavelet coefficients at each decomposition level by hard-thresholding or soft-thresholding with regard to the threshold value of the particular decomposition level,
- feeding the modified wavelet coefficients to an inverse wavelet transformation in order to obtain filtered measurement signals, wherein the inverse wavelet transformation of the modified wavelet coefficients takes place by means of a cascade-like arrangement of digital synthesis filters with finite impulse response in synthesis stages which correspond to the successive, cascade-like decomposition stages of the decomposition filters, wherein the modified wavelet coefficients of the last decomposition level are fed to a pair of inverse high-pass and low-pass filters, the values of both filters are added and divided by 2, as a result of which a mean is formed and the mean is fed to a further, subsequently higher stage, wherein delay elements of different lengths are arranged between the decomposition and synthesis FIR filters, and wherein the digital synthesis filters operate in point-by-point mode, wherein the inverse wavelet transformation of the modified wavelet coefficients is carried out using the stationary wavelet transformation,

the method further comprises the steps of:

- stopping the filtering of measurement signals during a measurement pause by feeding at least one additional signal,
- providing the data of the previous measurement as history when the measurement is resumed.

2. Method according to claim 1, **characterised in that**, in order to calculate the threshold value, the maximum value of the difference between one threshold value and the subsequent threshold value is limited.

3. Method according to claim 1, **characterised in that** the non-destructive material testing signals are ultrasonic pulses or leakage flux testing signals.

4. Method according to claim 1, **characterised in that**, if there are measurement pauses, the beginning or the end of the measurement pause is indicated via at least one signal and the length of the measurement pause is known.

5. Method according to any of claims 1 to 4, **characterised in that**, in the case of an n-level wavelet decomposition, the approximation which represents the longest-wave portion of the signal is also fed to a threshold value analysis.

6. Method according to claim 5, **characterised in that** the approximation is set to zero.

7. Method according to any of claims 1 to 6, **characterised in that** the standard deviation from the mean is used to calculate the statistical parameter.

8. Method according to any of claims 1 to 6, **characterised in that** the root mean square value is used to calculate the statistical parameter.

9. Method according to any of claims 1 to 6, **characterised in that** the standard deviation from the median is used to calculate the statistical parameter.

10. Method according to any of claims 1 to 9, **characterised in that** the sampling rate can be freely selected as a parameter for adapting the filter.

11. Method according to any of claims 1 to 10, **characterised in that** the number of decomposition stages can be freely selected.

12. Method according to any of claims 1 to 11, **characterised in that** the wavelets on which the filtering is based can be freely selected.

**Revendications**

1. Procédé de filtrage de signaux de mesure lors du contrôle non destructif de matériaux pour détecter des défauts de surface ou des écarts d'épaisseur de paroi pendant de la fabrication de tubes métalliques, le procédé comprenant les étapes suivantes:

- exciter une paroi du tube avec des signaux de contrôle non destructif de matériaux,
- recevoir des signaux de mesure qui ont été réfléchis sur une surface intérieure du tube et, à l'aide d'un processeur de signal,

- filtrer les signaux de mesure, sous la forme d'un flux continu de données numériques, par filtrage par ondelettes à l'aide d'un filtre à ondelettes,

le filtre à ondelettes comprenant un agencement en cascade de filtres de décomposition numériques à réponse impulsionnelle finie en niveaux de décomposition qui fonctionnent en mode point par point, les signaux de mesure étant tout d'abord convertis, au moyen d'une transformation en ondelettes, en le domaine d'ondelettes dans lequel les signaux comprennent des coefficients d'ondelettes à chaque niveau de décomposition, et la transformation en ondelettes des signaux de mesure étant effectuée à l'aide d'une transformation en ondelettes stationnaire,

- calculer un paramètre statistique à chaque niveau de décomposition à partir d'un nombre réglable de coefficients d'ondelettes déjà calculés de ce niveau de décomposition,

- détermination une valeur de seuil à chaque niveau de décomposition par multiplication du paramètre statistique par une valeur réglable commune à tous les niveaux,

- modifier les coefficients d'ondelettes à chaque niveau de décomposition par seuillage dur ou doux par rapport à la valeur de seuil du niveau de décomposition respectif,

- appliquer les coefficients d'ondelettes modifiés à une transformation en ondelettes inverse afin d'obtenir des signaux de mesure filtrés, la transformation en ondelettes inverse des coefficients d'ondelettes modifiés étant effectuée au moyen d'un agencement en cascade de filtres de synthèse numériques à réponse impulsionnelle finie dans des niveaux de synthèse qui correspondent aux niveaux de décomposition en cascade successifs des filtres de décomposition, les coefficients d'ondelettes modifiés du dernier niveau de décomposition étant appliqués à une paire de filtres passe-haut et passe-bas inverses, les valeurs des deux filtres étant additionnés et divisés par 2 de façon à former une valeur moyenne et appliquer la valeur moyenne à un autre niveau plus élevé suivant, des éléments à retard de différentes longueurs étant disposés entre les filtres FIR de décomposition et de synthèse, et les filtres de synthèse numériques fonctionnant en mode point par point, la transformation en ondelettes inverse des coefficients d'ondelettes modifiés étant effectuée à l'aide de la transformation en ondelettes stationnaire,

le procédé comprenant en outre les étapes suivantes :

- arrêter le filtrage de signaux de mesure pendant une pause de mesure à l'aide d'au moins un signal supplémentaire,

- fournir les données de la mesure précédente comme historique lorsque la mesure est reprise.

**2.** Procédé selon la revendication 1, **caractérisé en ce que**, pour calculer la valeur de seuil, la valeur maximale de la différence entre la première et la valeur de seuil suivante est limitée.

**3.** Procédé selon la revendication 1, **caractérisé en ce que** les signaux de contrôle non destructif de matériaux sont des impulsions ultrasonores ou des signaux de contrôle à flux diffus.

**4.** Procédé selon la revendication 1, **caractérisé en ce que**, lors de pauses de mesure, le début ou la fin de la pause de mesure est indiqué par au moins un signal et la durée de la pause de mesure est connue.

**5.** Procédé selon l'une des revendications 1 à 4, **caractérisé en ce que**, dans le cas d'une décomposition en ondelettes à n niveaux, l'approximation qui représente la portion de signal ayant la plus grandeur longueur d'onde, est également appliquée à une analyse de valeur de seuil.

**6.** Procédé selon la revendication 5, **caractérisé en ce que** l'approximation est mise à zéro.

**7.** Procédé selon l'une des revendications 1 à 6, **caractérisé en ce que** l'écart-type par rapport à la moyenne est utilisé pour calculer le paramètre statistique.

**8.** Procédé selon l'une des revendications 1 à 6, **caractérisé en ce que** la valeur quadratique moyenne est utilisée pour calculer le paramètre statistique.

**9.** Procédé selon l'une des revendications 1 à 6, **caractérisé en ce que** l'écart-type par rapport à la médiane est utilisé pour calculer le paramètre statistique.

**10.** Procédé selon l'une des revendications 1 à 9, **caractérisé en ce que** la fréquence d'échantillonnage peut être librement choisie comme paramètre d'adaptation du filtre.

**11.** Procédé selon l'une des revendications 1 à 10, **caractérisé en ce que** le nombre de niveaux de décomposition peut être librement choisi.

**12.** Procédé selon l'une des revendications 1 à 11, **caractérisé en ce que** les ondelettes sur lesquelles repose le filtrage peuvent être librement choisies.

input — n HP — nTP

2n HP / 2n TP
4n HP / 4n TP
8n HP / 8n TP
16n HP / 16n TP
32n HP / 32n TP

d1 — delay N1 — level 1
d2 — delay N2 — level 2
d3 — delay N3 — level 3
d4 — delay N4 — level 4
d5 — delay N5 — level 5
d6 — 32n iHP — level 6
d6 — 32n iTP

niHP / niTP — output
2n iHP / 2n iTP — $/2$
4n iHP / 4n iTP — $/2$
8n iHP / 8n iTP — $/2$
16n iHP / 16n iTP — $/2$
32n iHP — $/2$

**Fig.1**

$d_i$
length of history
factor
alpha

statistical calculation — threshold$_i$

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10225344 A1
- WO 2005012941 A

- DE 102005036509 A1

**In der Beschreibung aufgeführte Nicht-Patentliteratur**

- **E. PARDO et al.** Shift Invariant Wavelet Denoising of Ultrasonic Traces. *Acta Acustica United with Acustica,* 2008, vol. 94, 685-693